(19) Europäisches Patentamt
European Patent Office
Office européen des brevets

(11) EP 1 496 351 B1

(12) **EUROPEAN PATENT SPECIFICATION**

(45) Date of publication and mention of the grant of the patent:
**27.03.2013 Bulletin 2013/13**

(51) Int Cl.:
***G01N 21/64*** *(2006.01)*

(21) Application number: **04022872.8**

(22) Date of filing: **09.06.1998**

(54) **Monitoring the concentration of a chemical treatment product in a slurry or powder sample using a fluorometer**

Überwachung der Konzentration eines chemischen Behandlungsprodukts in einer Schlämme- oder Pulverprobe unter Verwendung eines Fluorometers

Contrôle de concentration d'un produit de traitement chimique dans un échantillon en boue ou en poudre utilisant un fluoromètre

(84) Designated Contracting States:
**AT BE DE ES FI FR GB IE IT NL PT SE**

(30) Priority: **11.06.1997 US 873046**
**17.06.1997 US 877452**
**28.05.1998 US 87466**

(43) Date of publication of application:
**12.01.2005 Bulletin 2005/02**

(62) Document number(s) of the earlier application(s) in accordance with Art. 76 EPC:
**98928987.1 / 0 988 524**

(73) Proprietor: **NALCO CHEMICAL COMPANY**
**Naperville, IL 60563-1198 (US)**

(72) Inventors:
- **Alfano, Joseph C.**
  **Crestwood, IL 60445 (US)**
- **Fehr, Michael J.**
  **Geneva, IL 60134 (US)**
- **Godfrey, Martin R.**
  **Naperville**
  **Illinois 60565 (US)**
- **Hoots, John E.**
  **St. Charles**
  **Illinois 60174 (US)**
- **Moeggenborg, Kevin J.**
  **Naperville**
  **Illinois 60565 (US)**
- **Rao, Narasimha M.**
  **Naperville**
  **Illinois 60565 (US)**
- **Rasimas, Jeffrey P.**
  **Naperville**
  **Illinois 60564 (US)**
- **Tubergen, Karen R.**
  **Mt. Prospect**
  **Illinois 60056 (US)**
- **Whitten, James E.**
  **Hudson, New Hampshire 03015 (US)**

(74) Representative: **Chalk, Anthony John et al**
**Harrison Goddard Foote**
**Saviour House**
**9 St Saviourgate**
**York, YO1 8NQ (GB)**

(56) References cited:
**US-A- 4 992 380**
**US-A- 5 171 450**
**US-A- 5 411 889**

- **HAUSER P C ET AL: "A SOLID-STATE INSTRUMENT FOR FLUORESCENCE CHEMICAL SENSORS USING A BLUE LIGHT-EMITTING DIODE OF HIGH INTENSITY" MEASUREMENT SCIENCE AND TECHNOLOGY, vol. 6, no. 8, 1 August 1995 (1995-08-01), pages 1081-1085, XP000525059**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

The present invention relates to using an all solid-state fluorometer for monitoring the fluorescence of a slurry or of a powder.

It is generally known to use diode lasers or light-emitting diodes (LED) as solid-state excitation sources for fluorescence. The combination, however, of excitation sources with photodiode detectors is not as common. As early as 1988, a fluorometer from an LED and a photodiode detector was constructed. See, for example, an article by Jones et al. entitled "High Precision Fluorimetry with a Light-Emitting Diode Source," Appl. Spectroscopy 42, 1469 (1988*)*. In 1989, a 670 nanometer (hereinafter "nm") diode laser was used as an excitation source and a photomultiplier (PMT) as a detector. See Imasaka et al. "Visible Semiconductor Laser Fluorometry," Anal. Chem. 61, 2285 (1989*)*. Other examples are known in which semiconductor lasers have been combined with conventional PMT detectors. See, for example, Patonay et al. "Semiconductor Lasers in Analytical Chemistry," Proceedings of SPIE-The International Society for Optical Engineering 1435, 42 (1991*);* Higashijima et al. "Determination of Amino Acid By Capillary Zone Electrophoresis Based on Semiconductor Laser Fluorescence Detection," Anal. Chem. 64, 711 (1992*);* and Mank et al. "Visible Diode Laser Induced Fluorescence Detection in Liquid Chromatography after Precolumn Derivatization of Thiols," Anal. Chem. 65, 2197 (1993*)*.

In addition, several more recent publications have dealt with fluorescence measurements using LEDs or diode lasers as excitation sources and silicon photodiodes as detectors. See, for example, Hauser et al.,"A Solid-State Instrument for Fluorescence Chemical Sensors Using a Blue Light-emitting diode of High Intensity," Meas. Sci. Technol. 6, 1081 (1995*);* Wengatz et al., "Immunoassays for Pesticide Monitoring," Proceedings of SPIE-The International Society for Optical Engineering 2388, 408 (1995*);* Williams et al., "Instrument to Detect Near-Infra-Red Fluorescence in Solid-Phase Immunoassay," Anal. Chem. 66, 3102 (1994*);* and Kawazumi et al., "Laser Fluorimetry Using A Visible Semiconductor Laser and an Avalanche Photodiode for Capillary Electrophoresis," Anal. Sci. 11, 587 (1995*)*.

Of the above, most of the few known literature references demonstrate the principle of fluorometry using solid-state, low cost excitation sources. Only a few of the existing papers, however, deal with applications of this instrumentation. For example, Higashijima et al. generally disclose the use of fluorescence detectors for electrophoresis; Mank et al. generally disclose the use of fluorescence detectors for liquid chromatography; and Hauser et al. relate to use of fluorescence detectors for chemical-sensing membranes. In addition, Wengatz et al. explore the use of fluorescence detectors for pesticide monitoring.

A number of other techniques are known for monitoring fluorescence, for example, from oil residues on steel sheets (such as taught by Montan et al. in "A System for Industrial Surface Monitoring Utilizing Laser-Induced Fluorescence," Appi. Phys. 838, 241 (1985)) and for fluorescence analysis of biologically important molecules in turbid or opaque tissue samples (for example, as demonstrated by Winkleman et al. in "Quantitative Fluorescence Analysis in Opaque Suspensions Using Front Face Optics," Anal. Chem. 39, 1007 (1967)). Furthermore, use of an excimer laser to perform fluorescent imaging of paper surfaces is generally taught by Hakkanen et al. in "Laser-Induced Fluorescence Imaging of Paper Surfaces," Appl. Spectroscopy 47, 2122 (1993); and use of a diode laser in surface fluorescence geometry is also generally taught, for example, by German Patent No. DE4300723 A1.

US-A-5411889 discloses a method of regulating the in-system concentration of a water treatment agent in an industrial fluid system which comprises: adding an inert tracer to an industrial fluid system, the inert tracer being added in known proportion to a target species also being added to the system, wherein the system consumption of the target species is effected by the water treatment agent; drawing a sample of fluid from the system; monitoring the target species by analysis of the sample to determine at least one characteristic that can be correlated to an in-system concentration of the target species; monitoring the inert tracer by analysis of the sample to determine the in-system concentration of the tracer; determining the system consumption of the target species from the measured in-system concentration of the target species and inert tracer; and regulating the in-system concentration of the water treatment agent in the fluid system based on the system consumption of the target specie. Typically, the target species might be monitored by fluorescence analysis of the sample to determine at least one fluorescence emission value that can be correlated to the in-system concentration of the target species. In combination with the inert tracer, the system consumption for the target specie can be determined and a responsive adjustment of the in-system concentration of a water treatment agent can be made.

Fluorometers currently being used for industrial process monitoring and control are based on gas-lamp excitation sources and photomultiplier tube detectors which require high current, high voltage power supplies. These excitation and detection sources do not have the intrinsic reliability of solid-state semiconductor devices.

A need, therefore, exists for an improved fluorometer constructed as an all solid-state fluorometer including a system and method for the use of such a fluorometer for monitoring the fluorescence of industrial aqueous systems or industrial non-aqueous systems or of a mixture of an industrial aqueous system and an industrial non-aqueous system, or of a slurry or of a solid.

The present invention envisages the use of a solid-state fluorometer for monitoring the fluorescence in a sample of a slurry or a powder, said fluorometer comprising:

(a) a solid-state excitation source, with said excitation source being selected from the group consisting of a diode laser and a light-emitting diode;
(b) a power source to power the excitation source and other components of the fluorometer;
(c) a photodiode detector for receiving fluorescence emitted by said sample and for producing an output signal proportional to the quantity of fluorescence received on the detector;
(d) a filter constructed and arranged between said sample and the detector to reject scattered light from the excitation source;
(e) a device capable of converting said output signal of said photodiode detector wherein said device is selected from the group consisting of an amplifier and an integrator; and
(f) optionally, a lens constructed and arranged between said sample and said detector to image the fluorescence emitted by said sample onto the detector.

Thus, the present invention provides a method for monitoring the concentration of a chemical treatment product or other additive in a sample, the method comprising the steps of:

(I) using a solid-state fluorometer as hereinbefore defined to monitor fluorescence emitted by said sample, wherein said fluorescence is monitored by selecting a sample from a slurry or a powder, with said sample comprising

(i) a chemical treatment product or other additive, and
(ii) fluorescent tracer molecules;

and directing the light from the excitation source at said sample such that the light excites said fluorescent tracer molecules producing fluorescence, with said fluorescence being received by the photodiode detector wherein the angle between the excitation source, the sample and the detector in said solid-state fluorometer is from about 20° to about 77°, to detect fluorescence on the surface of said sample;
(II) using the fluorescence detected in Step I to determine the concentration of said chemical treatment product or other additive present on the surface of said sample.

Another aspect of the present invention is where a power source is provided to said fluorometer such that the power source allows for portability of the fluorometer.
In one aspect of the present invention, the chemical treatment product or other additive comprises a non-fluorescing chemical treatment product or other additive.
In another aspect of the present invention, the chemical treatment product or other additive and the fluorescent tracer molecules comprise a fluorescent chemical treatment product or fluorescent other additive or a fluorescently-tagged chemical treatment product or a fluorescently-tagged other additive.
The invention detailed in this application is distinct from the prior art. While prior art does disclose the existence of certain solid-state fluorometers for fluorescent measurements, it does not teach the use of the technology according to the method hereinbefore defined for monitoring and control of a chemical treatment product or another additive in a sample of a slurry or of a powder.

Figure 1 illustrates a schematic diagram of an embodiment of a fluorometer, using a diode laser excitation source.
Figure 2 illustrates fluorescence data for Rhodamine 800 from a laser diode fluorometer of the present invention compared to fluorescence data from a conventional (Hitachi) fluorometer.
Figure 3 illustrates a graph of fluorescence from a diode laser fluorometer at different concentrations of aqueous Rhodamine 800 vs. time.
Figure 4 illustrates a graph of a fluorescence signal of aqueous methylene blue as a function of solution concentration measured using a diode laser fluorometer.
Figure 5 illustrates a schematic diagram of the embodiment of a fluorometer, using a light-emitting diode as an excitation light source, used in the present invention.
Figure 6 illustrates a graph of fluorescein fluorescence from a 4.14 MPa (600 psig) test boiler using a light-emitting diode based fluorometer of the present invention vs. a conventional fluorometer.
Figure 7 illustrates a schematic diagram of an embodiment of a fluorometer used for the detection of surface fluorescence from slurries or solids.
Figure 8 illustrates a graph of fluorescence from opaque ceramic slurry samples containing different concentrations of sodium fluorescein using a light-emitting diode fluorometer of the present invention; wherein a 485 nm Schott glass filter was used in the excitation path and a 515 nm Schott glass filter was used in the emission path.
Figure 9 illustrates a graph of fluorescence using methylene blue in a turbid solids/liquids waste sample using a 670 nm diode laser fluorometer of the present invention.

Figure 10 illustrates a graph of fluorescence from an opaque 2.5% pulp slurry containing different concentrations of methylene blue using a 670 nm diode laser fluorometer of the present invention.

Figure 11 illustrates a graph comparing data obtained using a Panasonic 450 nm high brightness blue light-emitting diode and fluorescein in an alumina ceramic slurry. Results from two different runs are shown, with the difference between the two being the choice of Schott glass emission filter.

Throughout this application the following terms are used to described certain wavelength ranges of light (with the wavelength range expressed in nanometers "nm" or meters "m"):

| | |
|---|---|
| X-ray | 0.1 nm-10 nm |
| Ultraviolet | 10 nm-400 nm |
| Visible | 400 nm-700 nm |
| Infrared | $7 \times 10^{-7}$ m-0.05 m. |

The present invention provides for an improved fluorometer and method of detecting the fluorescence of industrial aqueous systems or industrial non-aqueous systems or of a mixture of an industrial aqueous system and an industrial non-aqueous system, or of a slurry or of a solid. The amount of fluorescence detected is useful in monitoring the concentration of chemical treatment agents or other additives in industrial aqueous systems, industrial non-aqueous systems, a mixture of an industrial aqueous system and an industrial non-aqueous system, in slurries and in solids.

To this end, a fluorometer is provided having a solid-state excitation source to direct light in a specified direction. A sample having a concentration of fluorescent tracer molecules is provided wherein the light from the excitation source is directed at the sample such that the light excites said fluorescent tracer molecules in the sample and produces fluorescence. A detector receives the fluorescence from the excitation of the sample and produces an output signal proportional to the quantity of fluorescence received on the detector wherein the quantity of fluorescence is further proportional to the concentration of the fluorescent tracer molecules in the sample and wherein said amount of fluorescent tracer molecules present is further proportional to the amount of said non-fluorescing chemical treatment product or other additive in said sample. Because the concentration of the fluorescent tracer molecule is proportional to non-fluorescing chemical treatments or other additives, the concentration of the non-fluorescing chemical treatment product or other additive can be monitored.

This fluorometer also works for systems wherein the fluorescent treatment molecules are present as part of a fluorescent chemical treatment product or fluorescent other additive or a fluorescently-tagged chemical treatment product or fluorescently-tagged other additive.

Optionally, a lens may be provided between the sample and the detector to image the fluorescence excited from the sample onto the detector.

A power source is required to power the excitation source and other components of the fluorometer. DC power from an AC-DC transformer is capable of providing the necessary power. In another aspect of the instant invention, a power source (e.g. a battery) is provided to the fluorometer such that the power source allows for portability of the fluorometer.

The excitation source may be a diode laser, including visible and near-infrared diode laser or it may be a LED or other solid-state light source. LEDs are solid-state devices that are known to produce visible and infrared light (~420 to 1000 nm). Certain LEDs, described in the following text, are capable of producing light in the ultraviolet and infrared of from about 365 nm to about 425 nm.

The desirable properties of these LEDs include low power requirements, extremely long (20,000 hours) operating lifetimes, low heat dissipation, relatively discrete emission wavelengths, and compact size. These devices are able to operate in continuous (dc) or pulsed methods, which can effect both the lifetime and the power output of the devices.

There are many types of LEDs that are known in the art. The fabrication of the devices involves selective doping of inorganic semiconductors to produce materials with the desired spectral properties. For example, LEDs based on GaN (gallium nitride) can be fashioned to operate between 420 nm and 650 nm if the GaN is selectively doped with Al (aluminum) or In (indium). Additionally, LEDs based on GaP (gallium phosphide) operate in the green (530-565 nm) region and devices based on GaAlAs (gallium-aluminum-arsenide) operate in the red (620 nm) region. The salient point of the fabrication of these devices is that one or two base substrates can be tailored with trace dopants to provide light throughout the visible and infrared region.

In addition to those LEDs previously described, laboratory organic polymer-based LED units are available that can be used as light sources in the visible and infrared region.

A LED, manufactured by Nichia Chemical Industries, Ltd., 491 Oka, Kaminaka-Cho, Anan-Shi, TOKUSHIMA 774-8601, JAPAN (telephone +81-884-22-2311, telefax +81-884-21-0148) uses solely undoped GaN. This device operates in the ultraviolet region as follows; a forward current of about 10 milliamps (hereinafter "mA"), the peak wave length for this LED is about 370 nm according to the "High Power Can Type LED" specification sheet supplied by Hitachi. At a forward current of about 20 mA the wavelength of light from this LED is emitted in a bandwidth from about 365 nm to about 425 nm, with the centerpoint of this bandwidth being about 390 nm, according to the reference Sato et al., "Properties of Full-Color Fluorescent Display Devices Excited by a UV Light-Emitting Diode", Japanese Journal of Applied Physics, Vol. 37, pp. L129-L131(1998*)*. This device provides an inexpensive, solid-state light source previously unavailable as an excitation source for fluorescence instrumentation. Furthermore, the spectral properties of this device are such that the emission feature does not "tail" towards the higher wavelength region. This aspect makes it particularly attractive as a light source in a solid-state fluorescence instrument, as spectral filtering requirements become less stringent.

Another source of ultraviolet light from an LED can be obtained by operating an LED in an unconventional fashion. Blue LEDs operating at higher than specified forward currents have been found to emit a portion of their optical output in the ultraviolet and low infrared region of the spectrum, i.e., in the range of from about 370 nm to about 410 nm. For example, T. Araki and H. Misawa ("Light-Emitting Diode-Based Nanosecond Ultraviolet Light Sources for Fluorescence Lifetime Measurements," Rev. Sci. Instrum. 66,5469 (1995*)*) have shown that a nominal 450 nm indium gallium nitride/aluminum gallium nitride (InGaN/AlGaN) LED operating at currents greater than 50 mA emits a 380 nm satellite peak which grows in intensity with increasing current. Satellite emissions of 380-390 nm have been observed from a variety of blue LEDs at higher than specified operating currents and voltages. This satellite peak may be used to excite fluorescence from near-UV absorbing fluorophores for industrial water stream applications, such as pyrene tetrasulfonic acid (PTSA). The LED may either be operated in continuous or pulsed mode. The pulsed mode may be desirable to extend the lifetime of the LED or to allow higher peak optical output to be achieved.

Diode lasers emitting light at wavelengths of from about 635 nm to about 1600 nm are commercially available for use as an excitation source in the fluorometers of the present invention. In addition, diode lasers with wavelengths as short as 405 nm have been demonstrated under laboratory conditions.

Also, the solid-state excitation source may:

a) be pulsed to enable measurement of the fluorescent or phosphorescent lifetimes of chemical species in the industrial aqueous system or the industrial non-aqueous system or in a mixture of the industrial aqueous system and industrial non-aqueous system; or

b) be pulsed to enable higher peak output power at a given spectral region without damaging the excitation source; or

c) be pulsed and the detector circuitry "phase-locked" to the frequency of the excitation source to achieve higher sensitivity or to differentiate between multiple excitation sources.

When either the diode laser or a LED is used as the excitation source, the fluorometer may have an additional optional photodiode detector to monitor intensity from the excitation source.

It is known that it is theoretically possible to measure fluorescence wherein the excitation source and sample and detector are arranged at an angle of from about 0° to about 180°.

For measurement of the fluorescence on the external surface of a slurry or solid the excitation source is arranged such that it strikes the sample cell on the side of the sample cell that faces the detector. Furthermore, the excitation source is arranged relative to the photodiode detector such that the angle formed by drawing a line from the excitation source to the sample and then to the detector is from about 20° to about 77°. Preferably this angle is from about 30° to about 60°, and most preferably this angle is about 45°. This allows fluorescence to be detected from the external surface of turbid or opaque samples, which include slurries and powders, since it is not necessary for the excitation light to penetrate the sample.

When the excitation source and detector are separated by an angle of from about 20° to about 77°, multiple filters may be used to suppress scattered excitation light. The polarized nature of diode laser light may also be taken advantage of to reject scattered excitation light by using cross-polarization in the detection path. Also, LED light can be polarized via a polarization filter and cross-polarized fluorescence detected which minimizes the detection of scattered light.

It is also possible to have multiple excitation sources and detectors stacked to measure a corresponding number of multiple analytes in the sample stream.

The filter used in this fluorometer is known in the art of optical spectroscopy.

The photodiode detector used in the present invention may be any of those known in the art, such as, but not limited to, silicon, silicon carbide, gallium arsenide or gallium phosphide. The preferred photodiode detector depends upon the excitation source with silicon photodiode detectors preferred for those excitation sources that emit light outside the ultraviolet range, and enhanced silicon photodiodes and gallium phosphide photodiode detectors being preferred for those excitation sources that emit light within the ultraviolet range. In addition there are spectral regions that are amenable to several classes of photodiodes.

The device capable of handling the output signal of the photodiode detector is selected from the group consisting of an amplifier and an integrator. An amplifier acts to handle the output signal by converting the output photocurrent to a corresponding amplified voltage. The magnitude of amplification is controlled by use of feedback resistors with the amplifier. An integrator acts to handle the output signal by direct summation of the output photocurrent. The magnitude of the integrated value is controlled by summation for various time periods such that adequate count levels are obtained. Amplifiers and integrators suitable for use in the present invention are well known in the art and are commercially available.

The lens that may be used in this fluorometer is also known in the art of optical spectroscopy.

The fluorometer is constructed to be used on slurry or solid samples by arranging the excitation source, sample and detector in the previously described from about 20° to about 77° angle. Both liquid and solid sampling can either be done on- or off-line.

With this invention the concentration of a non-fluorescing chemical treatment product or other additive to an industrial aqueous system or an industrial non-aqueous system or a mixture of an industrial aqueous system and an industrial non-aqueous system or a slurry or a powder, can be measured and controlled when it is fed in known proportion to a fluorescing tracer agent which can be directly measured and controlled by the fluorometer. It is also possible using the fluorometer of this invention to measure and control the concentration of a fluorescent or fluorescently-tagged chemical treatment product or other additive in the same manner. Furthermore, it is possible, and preferred, that the monitoring of fluorescence is conducted in real time with either feedback or feedforward control of dose of chemical treatment product or other additive to the system being done.

For purposes of this invention, fluorescent tracer molecules include those that are inert and those that are reactive in the system. Fluorescent tracer molecules are well known in the art, see e.g. U.S. Patent Nos. 4,783,314; 4,992,380 and 5,041,386. It is necessary to match the emission wavelength from the excitation source with the known-in-the-art fluorescent excitation wavelength of each fluorescent tracer molecule in order to have a viable fluorescent measurement. For example, the previously described ultraviolet LED excitation source from Nichia is ideal for use in measuring the fluorescence of pyrenetetrasulfonic acid (PTSA), a well-known fluorescent tracer molecule.

Fluorescently-tagged chemical treatment products and fluorescently-tagged other additives are also well known in the art. See, e.g. 5,128,419; 5,171,450; 5,216,086; 5,260,386; 5,279,967 and 5,705,394. As with fluorescent tracer molecules themselves, it is necessary to match the emission wavelength from the excitation source with the known-in-the-art fluorescent excitation wavelength of each fluorescently-tagged chemical treatment product or fluorescently-tagged other additive in order to have a viable fluorescent measurement.

Fluorescent chemical treatment products or fluorescent other additives include, but are not limited to, those compounds described in U.S. Patent No. 5,278,074. Other possible fluorescent chemical treatment products or fluorescent other additives are contemplated to be any fluorescent material that is typically added or that could be added to an industrial aqueous system, an industrial non-aqueous system, a mixture of an industrial aqueous and industrial non-aqueous system, a slurry and a powder for any purpose. As with fluorescent tracer molecules themselves, it is necessary to match the emission wavelength from the excitation source with the known-in-the-art fluorescent excitation wavelength of each fluorescent chemical treatment product or fluorescent other additive in order to have a viable fluorescent measurement.

Non-fluorescing chemical treatment products include, but are not limited to flocculants, coagulants, scale inhibitors, corrosion inhibitors, biocides, surfactants and antifoam products. These products are well known in the art. Other possible additives are contemplated to be any material that is typically added to an industrial aqueous system, an industrial non-aqueous system, a mixture of an industrial aqueous and industrial non-aqueous system, a slurry and a powder for any purpose. For example, a number of different process additives are used in the production of ceramic materials. Binders, plasticizers, dispersants, pressing aids (lubricants), and antifoams are among the organic additives used in ceramic applications. Additionally, small amounts (<10%) of inorganic additives or dopants may be added to improve the sintering, mechanical, or electrical properties of the ceramic material.

Industrial aqueous systems wherein this invention could be used include, but are not limited to: cooling towers, boilers, heat exchangers, open recirculating cooling water systems, deaerators, closed recirculating heating systems, closed loop cooling/heating system, radiators, open once-through cooling systems, and pulp and paper process streams.

Industrial non-aqueous systems wherein this invention could be used include, but are not limited to: oil field process streams, metal working fluids, oil based paints, hydrocarbon refinery process streams, distillation column process streams, gasoline, kerosene and other petroleum based products.

Mixtures of industrial aqueous systems and industrial non-aqueous systems include, but are not limited to: latex paint, tape-joint compounds, shampoos, cosmetics, and food products.

Slurries where this invention could be used include, but are not limited to: ceramic, pulp, pigment, wastewater, sludge, mineral processing slurries such as coal flocculation and alumina processing slurries, gypsum for wallboard manufacture, cement and concrete. Fluorescence in slurries can be measured in different ways. The fluorescence of turbid slurries can be measured using a fluorometer of this invention set up to measure the fluorescence of the external surface of the slurry. If the slurry is transparent or translucent or has very low turbidity the fluorescence can be measured using the fluorometer set up to measure transparent or translucent liquids. In addition any slurry may be separated into a liquid supernatant component and a solid component by using any suitable separation technique known in the art, such as, but not limited to, filtration or centrifugation. Then the fluorescence of the liquid supernatant can be measured using a fluorometer of this invention set up to measure a transparent or translucent liquid or a liquid of low turbidity.

Powders where this invention could be used include, but are not limited to: ceramic powders, cosmetic powders, powder coatings, pharmaceutical powders and pigments.

Additional features and advantages of the present invention are described in, and will be apparent from, the detailed description of the presently preferred embodiments and from the drawings. Throughout this disclosure, the term "fluorescence" is meant to encompass both fluorescence and phosphorescence. The term "fluorophore" refers to an atom or molecule that emits light of a specific wavelength or range of wavelengths when radiatively excited by light of a shorter wavelength.

Referring now to Figure 1, a schematic of an instrument 10 of the present invention is generally illustrated. In the instrument 10, a solid-state diode laser including an integral photodiode 12 is used as an excitation source to excite fluorescent tracer molecules, or a fluorescent chemical treatment product or a fluorescent other additive or a fluorescently-tagged chemical treatment product or a fluorescently-tagged other additive.

Fluorescence resulting from excitation of the diode laser 12 may be imaged with a lens 14 onto a silicon photodiode detector 16. An optical filter 18 may be placed between a sample cell 20 and the photodiode detector 16 to reject scattered laser light. An output from the photodiode detector 16 may be amplified by a precision FET-input operational amplifier 22 which is capable of producing an output voltage signal proportional to the quantity of fluorescence-striking the photodiode detector 16.

Since this fluorescence is proportional to the concentration of a fluorophore present in an aqueous or non-aqueous sample or a fluorophore present on the surface of a slurry or a powder, continuous monitoring of a voltage output is possible, and real time measurement of the concentration of a fluorescent tracer present in the sample may be ascertained. Furthermore, the voltage signal from the photodiode detector 16 may be compared to pre-set values. Such a comparison may take place either electronically or via a microcomputer. With such comparisons, the voltage signal may be used to control a pump relay which is capable of controlling the dosage of a chemical treating product or other additive containing an inert fluorescent tracer or a fluorescent chemical treatment product or a fluorescent other additive or a fluorescently-tagged chemical treatment product or a fluorescently-tagged other additive.

Figure 2 illustrates the fluorescence signal of the diode laser fluorometer instrument 10 as compared to the fluorescent signal of a conventional Hitachi fluorometer in the measurement of the fluorescence of Rhodamine 800. The two signals are quite congruent.

Figure 3 illustrates the fluorescence signal of the diode laser fluorometer instrument 10 as a function of time for various Rhodamine 800 dye concentrations. The detection limit for this dye with the instrument 10 is measured to be 1.5 parts per billion (ppb) which is sufficient for the types of applications set forth above.

Another example of a fluorescent compound is methylene blue. Figure 4 illustrates the fluorescence signal of methylene blue as measured by the diode laser-based fluorometer instrument 10 as a function of methylene blue concentration. The plot is linear with respect to concentration indicating effective performance of the fluorometer instrument 10. The instrument 10 has sufficient sensitivity to measure methylene blue concentrations as low as 10 ppb. Many other dyes may also be implemented which are suitable for fluorescent tracer measurements.

Figure 5 is a schematic of an embodiment of the present invention in which a light-emitting diode 112 is used as an excitation source. Unlike diode lasers, light-emitting diodes do not ordinarily have integral photodiodes to monitor and stabilize their optical output. In some cases, as shown in Figure 5, it may be necessary to use an external photodiode 113 to monitor an output of the light-emitting diode and normalize the fluorescence intensity to variations in its output. This photodiode can also serve as a monitor of optical fouling of the flow cell and can be used to indicate when the cell needs to be cleaned. An optical filter 118 is placed between the light-emitting diode 112 and a sample in order to remove components of the optical output that are at the same wavelength as the fluorescence. Other components of the instrumentation are the same as for Figure 1.

Figure 6 illustrates use of the light-emitting diode fluorometer shown in Figure 5 to monitor the concentration of fluorescein in a small laboratory simulation boiler. The graph of Figure 6 shows simultaneous signals from a conventional fluorometer and the solid-state fluorometer equipped with a high-brightness blue light-emitting diode with peak emission at 450 nm. The fluorometers are connected in series to the blowdown stream of the boiler. At approximately 0.5 hours into the run, the chemical feed containing the fluorescein was switched off. As shown in Figure 6, the fluorescence signal decays with time, and the two fluorometers track each other. Figure 6 illustrates that this invention would perform suitably in boiler water applications.

One application for the fluorometer is a cooling water application concerning inert tracer/treatment actives for closed-loop cooling/heating systems. The diode laser fluorometer instrument 10 or the light-emitting diode fluorometer shown in Figure 5 may be combined with a suitable fluorescent tracer molecule and used to monitor and control treatment dosage in closed-loop systems. As a result, on-line chemical feed control, that enables tight control of the amount of chemical in the system as water is added to or removed from the system, may be attained. In addition, monitoring of the consumption of a non-fluorescing or fluorescent or fluorescently-tagged chemical treatment product or other additive may also be achieved. Since the concentration of the inert tracer yields information on the amount of chemically treatment product or other additive added to the system, the consumption of the chemically treatment product or other additive may be determined. This information may then be used to make accurate and timely treatment decisions. Further, leak detection may also be achieved. The amount of leakage, either from the cooling stream to a process, or from a process into the cooling stream, may be measured if either of these contain a fluorophore.

Another cooling water application is for C-factor measurements. C-factor is a measure of fouling defined as in the following equation as:

C=(Flow divided by the square root of (DP))

where C is the C-factor, Flow is the flow rate of the system, DP is the drop in pressure of the system and square root of (DP) is the square root of the mathematical value for DP.

The diode laser fluorometer instrument 10 or the light-emitting diode fluorometer shown in Figure 5 may be combined with a suitable fluorescent tracer molecule and used to monitor fouling and constriction of heat-exchanger tubes via measurement of C-factors. These measurements consist of determining the pressure drop across the heat exchanger tube and then measuring the flow rate of the water stream. The diode laser fluorometer instrument 10 or the light-emitting diode fluorometer shown in Figure 5 and suitable fluorescent tracer molecule may then be used to ascertain the flow rate by injecting the fluorescent tracer at some point upstream in the system, and using the diode laser fluorometer instrument 10 or the light-emitting diode fluorometer shown in Figure 5 to monitor the diluted tracer concentration downstream of the injection point.

Another cooling water application involves inert tracer/non-fluorescing chemical treatment products or other additives for open circulating systems. When coupled with an inert tracer molecule in open recirculating cooling water systems, the diode laser fluorometer instrument 10 or the light-emitting diode fluorometer shown in Figure 5 may be used for monitoring, control and system diagnostics in open recirculating cooling water systems. The type of monitoring, control and diagnostics may be similar to those described in the closed-loop cooling/heating systems set forth above. When used to monitor/control inert tracer (treatment dosage) and treatment actives, the diode laser fluorometer instrument 10 or the light-emitting diode fluorometer shown in Figure 5 may be used to directly monitor/control system consumption of chemical treatment products or other additives. Using existing technology well-known to those of ordinary skill in the art, the fluorometer instrument 10 or the light-emitting diode fluorometer shown in Figure 5 may be used to measure the fluorescence intensity of a range of fluorescent compounds. An example of a suitable red-absorbing fluorophore is Rhodamine 800. A plot of its fluorescence intensity, as measured with the diode laser fluorometer instrument 10, and with a conventionally known fluorometer, is shown in Figure 2.

In boiler/food processing applications, either the diode-laser or LED embodiment of the solid-state fluorometer instrument may be used for numerous boiler diagnostic monitoring and control applications including chemical feed and control, boiler carry-over studies, boiler holding time measurements, boiler leak detection, and measurement of boiler cycles of concentration. Boiler cycles of concentration are defined herein as the quotient of the concentration of a component in the blowdown and the concentration of that component in the feedwater. Cycles = $C_f/C_i$ = (steady state blowdown concentration)/(Feedwater concentration).

Boiler cycles of concentration are a critical parameter in boiler operation. If the cycle of concentration value is too high, solubility limits of scale-forming solids can be exceeded. If the cycle value is too low, then there is inefficient usage of water, heat, and treatment chemicals. Fluorescence provides a convenient and accurate means of measuring cycles, since fluorescent molecules do not appreciably carry over into the steam and can be sensitively detected at low concentrations. Boiler holding time is defined in U.S. Patent No. 5,041,386, column 3, line 47 through column 5, line 14. This time can be an important parameter in applying the treating agent. If the treating agent itself is fluorescent, or if it is fed simultaneously with an inert fluorescing agent, then the holding time can be measured by fluorescence. Further, any treating agent can be monitored if it fluoresces or is fed with a fluorescing agent.

Fluorescein may be used as an additive for boilers which may be particularly beneficial in food applications. Blue light-emitting diodes are presently available which make construction of a solid-state fluorometer for fluorescein possible. Blue diode lasers are currently under development and once available, may be used to greatly increase the sensitivity of the solid-state fluorometer.

The use of a solid-state diode laser or light-emitting diode fluorometer to monitor cooling water, boiler, or other industrial water systems, has several advantages over known systems that use conventional fluorometers. For example, a wider application of tracers through reduced equipment costs may be implemented. The cost of the components used to make the solid-state fluorometer of the present invention is significantly lower than the cost of traditional fluorometers which are based on gas discharge lamps and photomultiplier tubes. In addition, the solid-state fluorometer is smaller than current fluorometers. Ideally, the solid-state fluorometer of the present invention may be pocket-sized. Furthermore, power consumption of the solid-state fluorometer is low, less than 0.2 watts and, therefore, the solid-state fluorometer may be battery powered. The above monitoring and diagnostics may, therefore, be performed by an individual at a variety of sample points. As a result, a savings in service time is achieved.

Since the instrument 10 of the present invention is solid-state, this instrument 10 has extremely high reliability. Operating lifetimes of diode lasers are typically between 20,000 to 40,000 hours, which are several times higher than that of gas discharge lamps. Additionally, due to the solid-state nature of the components, the design of the instrument 10 is simpler than the design of conventional instruments. Also, the assembly costs for instrument 10 are minimal.

The detection limit for Rhodamine 800, a red-absorbing fluorophore, was measured at 1.5 ppb with the diode laser fluorometer instrument 10 of the present invention as set forth above. Detection limits for other known fluorometers, such as Hitachi's F4500 Research Fluorometer, is approximately 5 ppb, higher than that of the present invention. Therefore, due to the high sensitivity of the photodiode detector to red light, as well as the high optical efficiency of using monochromatic lasers for an excitation source, the diode laser fluorometer instrument 10 of the present invention has excellent sensitivity.

Still further, the small size of the light source and detector of the present invention lends the diode laser fluorometer instrument 10 to multi-channel, multi-analyte detection. A sample stream, slurry or powder may contain several fluorescent tracers, and an array of two or more diode lasers of different wavelengths could simultaneously monitor several tracers as the sample stream passes through the flow cell. This type of multi-channel detection is more difficult to achieve using current technology.

An embodiment of the fluorometer in which the excitation and detection of fluorescence occurs from the front surface of the sample cell makes it possible to perform measurements in sample streams of high turbidity, e.g. slurries.

Figure 7 illustrates a solid-state fluorometer 200 for detecting surface fluorescence. As previously described, by arranging the excitation source, sample and detector in an angle of from about 20° to about 77°, fluorescence can be measured from the surface of the opaque sample or slurry. The angle in Figure 7 is about 45°. The coherence and polarization of a laser beam allows surface fluorometry to be performed much more conveniently and compactly than is possible with conventional excitation sources. Figure 7 shows a diode laser 212 with integral photodiode used as an excitation source. However, a light-emitting diode focused by a lens could, as well, be implemented.

In applications involving slurries, such as ceramic slurries, the solid-state fluorometer instrument 200 in the surface fluorescence configuration may monitor the concentration of fluorescence molecules in slurries. Applications within ceramic slurries include monitoring of treatment dosages; measurement of mixing times in batch mixing vessels; determination of batch contamination from ball mills and other mixing vessels; and, efficiency of transfer from ball mills to mixing tanks.

Use of the fluorometer of the instant invention is preferable to conducting the most common method currently employed to trace the concentration of organic additives in ceramic slurries which is the loss on ignition (LOI) method. The LOI method is very time consuming (typically 5-7 hours) and is not specific to a single additive. Only the total organic additive content can be determined. Additionally, some ceramic raw materials, such as clays, contain organic species as natural components of the material. The LOI method does not distinguish between this raw material component and organic process additives. As such, the LOI method can be misleading even to the total amount of process additives in a slurry.

This instrument permits either grab sample measurements or continuous on-line monitoring of a treatment agent which is fluorescent or a treatment agent to which a known concentration of an inert, fluorescent tracer molecule has been added. Furthermore, when using the method on slurries, as well as with detection of fluorescence in a water stream or non-aqueous stream, the voltage output of the detector can be compared to preset values, either electronically or with a microcomputer, and used to alter dosage of the treating agent.

In solids/liquids separation applications, the solid-state fluorometer instrument 200 in the external surface measurement configuration is capable of monitoring the concentration of fluorescent tracer species in solids/liquids waste water and sludge slurries. These slurries are highly turbid and cannot be monitored with current instrumentation without employing laborious filtration methods. These fluorescent measurements may enable a host of solids/liquids applications to be performed, including dosage control and optimization and performance monitoring.

Figure 8 illustrates the use of the invention in a surface fluorescence embodiment to monitor the concentration of fluorescein in a ceramic slurry.

The detection of methylene blue tracer in a turbid waste water sample by surface fluorescence is illustrated in Figure 9.

In pulp and paper applications, the solid-state fluorometer instrument 200 in the external surface fluorescent measurement configuration monitors fluorescent tracer concentrations in pulp and paper furnishes and pulp slurries. The solid-state fluorometer instrument 200 may be used in such applications to provide easy, inexpensive on-line monitoring capabilities.

Figure 10 illustrates the detection of methylene blue in a 2.5% pulp slurry by the external surface fluorescent measurement configuration embodiment of this invention.

Furthermore, the solid-state fluorometer instruments 10 and 200, and the LED fluorometer shown in Figure 5 may be used in applications including process control and monitoring and determination of treatment dosage via direct monitoring of fluorescently-tagged polymers, particularly in specific chemical applications.

It should be understood that the solid-state fluorometer instruments 10 and 200 are capable of performing any function of the existing technology provided that a suitable fluorophore is available which absorbs in the range accessible with diode lasers or light-emitting diodes.

Because diode lasers are monochromatic, directional light sources, when used in combination with a suitable tracer molecule, they may give lower detection limits than those achievable using current technology. Improved detection limits allow the use of lower tracer molecule concentrations.

As stated previously, diode lasers are also capable of being pulsed at high frequencies. With gated detection, pulsed operation allows different fluorophores that have distinct fluorescence lifetimes, but the same or similar absorption/emission spectra, to be resolved. This aids in multi-analyte monitoring. This sort of pulsed operation also permits quantitative detection of non-fluorescing molecules that cause changes in the lifetime of fluorescing tracer molecules. Furthermore, time-resolved fluorescence is capable of differentiating bound versus unbound fluorophores. In addition, it is also possible to conduct time-resolved fluorescence measurements by pulsing LEDs.

The implementation of lasers, which are coherent light sources, allows them, via the coherence, to be more easily and efficiently coupled into fiber optics. The use of fiber optics allows the instrument 10 to be constructed with a probe that can conveniently be inserted directly into a sample, sample stream, ceramic slurry and ceramic powder. This direct contact with the solution may have advantages in terms of performance (less light scatter and better signal-to-noise) and reliability (no glass flow cell to break).

Because diode lasers are polarized, the potential of fluorescence polarization to examine bound versus unbound fluorophores in coagulation and flocculation exists. This also allows for optimizing the performance of polymers in solids/liquids separations.

Figure 11 shows data obtained using a Panasonic 450 nm high brightness blue light-emitting diode and a suitable fluorophore, fluorescein, in an alumina slurry. The concentration of the fluorescein in the slurry was varied and fluorescence measurements were made. Results from two different runs are shown, with the difference between the two being the choice of Schott glass emission filter. Figure 8 shows similar data for fluorescein detection in a slurry made from a high purity alumina containing a green dye.

## Claims

**1.** A method for monitoring the concentration of a chemical treatment product or other additive in a sample, the method comprising the steps of:

(I) using a solid-state fluorometer (10, 100, 200) comprising

(a) a solid-state excitation source (12, 112, 212), with said excitation source being selected from the group consisting of a diode laser and a light-emitting diode;
(b) a power source to power the excitation source (12, 112, 212) and other components of the fluorometer;
(c) a photodiode detector (16, 116, 216) for receiving fluorescence emitted by said sample and for producing an output signal proportional to the quantity of fluorescence received on the detector;
(d) a filter (18, 118, 218) constructed and arranged between said sample and the detector (16, 116, 216) to reject scattered light from the excitation source (12, 112, 212);
(e) a device (22, 122, 222) capable of converting said output signal of said photodiode detector wherein said device is selected from the group consisting of an amplifier and an integrator; and
(f) optionally, a lens (14, 114, 214) constructed and arranged between said sample and said detector (16, 116, 216) to image the fluorescence emitted by said sample onto the detector;
wherein said fluorescence is monitored by selecting a sample from a slurry or a powder, with said sample comprising

(i) a chemical treatment product or other additive, and
(ii) fluorescent tracer molecules;

and directing the light from said excitation source (12, 112, 212) at said sample such that the light excites said fluorescent tracer molecules producing fluorescence, with said fluorescence being received by said photodiode detector (16, 116, 216) wherein the angle between said excitation source, said sample and said detector in said solid-state fluorometer is from about 20° to about 77°, to detect fluorescence on the surface of said sample;

(II) using the fluorescence detected in Step I to determine the concentration of said chemical treatment product or other additive present on the surface of said sample.

**2.** The method of claim 1 wherein said chemical treatment product or other additive comprises a non-fluorescing chemical treatment product or other additive.

**3.** The method of claim 1 wherein said chemical treatment product or other additive and said fluorescent tracer molecules comprise a fluorescent chemical treatment product or fluorescent other additive or a fluorescently-tagged chemical treatment product or a fluorescently-tagged other additive.

**4.** The method of claim 1, 2 or 3 wherein the power source provided to said fluorometer comprises a battery.

**Patentansprüche**

**1.** Verfahren zum Überwachen der Konzentration eines chemischen Behandlungsprodukts oder sonstigen Zusatzstoffs in einer Probe, wobei das Verfahren die folgenden Schritte beinhaltet:

(I) Verwenden eines Festkörper-Fluorometers (10, 100, 200), der Folgendes umfasst:

(a) eine Festkörper-Anregungsquelle (12, 112, 212), wobei die genannte Anregungsquelle aus der Gruppe bestehend aus einem Diodenlaser und einer Leuchtdiode ausgewählt wird;
(b) eine Stromquelle zum Speisen der Anregungsquelle (12, 112, 212) und anderer Komponenten des Fluorometers;
(c) einen Fotodiodendetektor (16, 116, 216) zum Empfangen von von der genannten Probe emittierter Fluoreszenz und zum Erzeugen eines Ausgangssignals proportional zur Menge an auf dem Detektor empfangener Fluoreszenz;
(d) ein Filter (18, 118, 218), das zwischen der genannten Probe und dem Detektor (16, 116, 216) konstruiert und angeordnet ist, um von der Anregungsquelle (12, 112, 212) zurückgestreutes Licht zurückzuweisen;
(e) eine Vorrichtung (22, 122, 222) zum Umwandeln des genannten Ausgangssignals des genannten Fotodiodendetektors, wobei die genannte Vorrichtung aus der Gruppe bestehend aus einem Verstärker und einem Integrator ausgewählt ist; und
(f) fakultativ eine Linse (14, 114, 214), die zwischen der genannten Probe und dem genannten Detektor (16, 116, 216) konstruiert und angeordnet ist, um die von der genannten Probe emittierte Fluoreszenz auf dem Detektor abzubilden;
wobei die genannte Fluoreszenz zum Auswählen einer Probe aus einem Schlamm oder einem Pulver überwacht wird, wobei die genannte Probe Folgendes umfasst:

(i) ein(en) chemisches Behandlungsprodukt oder sonstigen Zusatzstoff, und
(ii) fluoreszierende Spurenmoleküle;

und Leiten des Lichts von der genannten Anregungsquelle (12, 112, 212) auf die genannte Probe, so dass das Licht die genannten fluoreszierenden Tracer-Moleküle anregt und Fluoreszenz erzeugt, wobei die genannte Fluoreszenz von dem genannten Fotodiodendetektor (16, 116, 216) empfangen wird, wobei der Winkel zwischen der genannten Anregungsquelle, der genannten Probe und dem genannten Detektor in dem genannten Festkörper-Fluorometer von etwa 20° bis etwa 77° beträgt, um Fluoreszenz auf der Oberfläche der genannten Probe zu detektieren;

(II) Verwenden der in Schritt I detektierten Fluoreszenz zum Ermitteln der Konzentration des genannten chemischen Behandlungsprodukts oder sonstigen Zusatzstoffs, der auf der Oberfläche der genannten Probe vorliegt.

**2.** Verfahren nach Anspruch 1, wobei das genannte chemische Behandlungsprodukt oder der sonstige Zusatzstoff ein nicht fluoreszierendes chemisches Behandlungsprodukt oder sonstigen Zusatzstoff umfasst.

**3.** Verfahren nach Anspruch 1, wobei das genannte chemische Behandlungsprodukt oder der sonstige Zusatzstoff und die genannten fluoreszierenden Tracer-Moleküle ein fluoreszierendes chemisches Behandlungsprodukt oder einen sonstigen fluoreszierenden Zusatzstoff oder ein fluoreszierendes markiertes chemisches Behandlungsprodukt oder einen sonstigen fluoreszierenden markierten Zusatzstoff umfasst.

**4.** Verfahren nach Anspruch 1, 2 oder 3, wobei die an dem genannten Fluorometer vorgesehene Stromquelle eine Batterie umfasst.

## Revendications

**1.** Procédé de contrôle de la concentration d'un produit de traitement chimique ou d'un autre additif dans un échantillon, le procédé comprenant les étapes suivantes :

(I) à utiliser un fluoromètre à semi-conducteurs (10, 100, 200) comprenant

(a) une source d'excitation à semi-conducteurs (12, 112, 212), avec ladite source d'excitation étant choisie parmi le groupe constitué d'un laser à diodes et d'une diode électroluminescente ;
(b) une source d'alimentation pour alimenter la source d'excitation (12, 112, 212) et d'autres composants du fluoromètre ;
(c) un détecteur à photodiodes (16, 116, 216) pour recevoir une fluorescence émise par ledit échantillon et pour produire un signal de sortie proportionnel à la quantité de fluorescence reçue par le détecteur ;
(d) un filtre (18, 118, 218) construit et installé entre ledit échantillon et le détecteur (16,116, 216) pour rejeter la lumière dispersée en provenance de la source d'excitation (12,112, 212) ;
(e) un dispositif (22, 122, 222) capable de convertir ledit signal de sortie dudit détecteur à photodiodes dans lequel ledit dispositif est choisi parmi le groupe constitué d'un amplificateur et d'un intégrateur ; et
(f) éventuellement, une lentille (14, 114, 214) construite et installée entre ledit échantillon et ledit détecteur (16, 116, 216) pour imager la fluorescence émise par ledit échantillon sur le détecteur ;
dans lequel ladite fluorescence est surveillée en sélectionnant un échantillon qui provient d'une suspension ou d'une poudre, avec ledit échantillon comprenant

(i) un produit de traitement chimique ou un autre additif, et
(ii) des molécules indicatrices fluorescentes ;
et dirigeant la lumière de ladite source d'excitation (12,112, 212) audit échantillon de sorte que la lumière excite lesdites molécules indicatrices fluorescentes qui produisent une fluorescence, avec ladite fluorescence étant reçue par ledit détecteur à photodiodes (16,116, 216) dans lequel l'angle entre ladite source d'excitation, ledit échantillon et ledit détecteur dans ledit fluoromètre à semi-conducteurs varie d'environ 20° à environ 77°, pour détecter la fluorescence sur la surface dudit échantillon ;
(ii) utiliser la fluorescence détectée à l'étape I pour déterminer la concentration dudit produit de traitement chimique et d'un autre additif présent à la surface dudit échantillon.

**2.** Procédé selon la revendication 1, dans lequel ledit produit de traitement chimique ou autre additif comprend un produit de traitement chimique ou autre additif non fluorescent.

**3.** Procédé selon la revendication 1, dans lequel ledit produit de traitement chimique ou autre additif et lesdites molécules indicatrices fluorescentes comprennent un produit de traitement chimique fluorescent ou un autre additif fluorescent ou un produit de traitement chimique marqué de façon fluorescente ou un autre additif marqué de façon fluorescente.

**4.** Procédé selon la revendication 1, 2 ou 3, dans lequel la source d'alimentation fournie audit fluoromètre comprend une batterie.

FIG.1

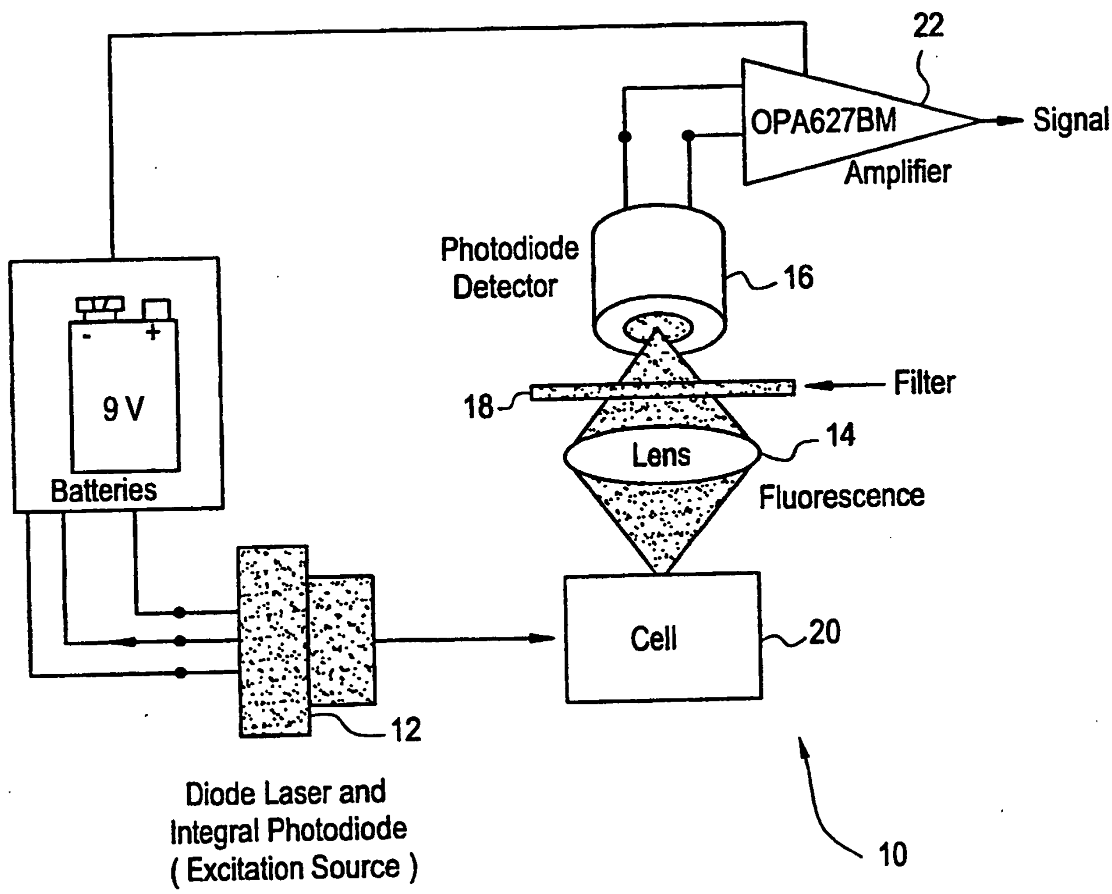
22
OPA627BM
Amplifier
Signal
Photodiode
Detector
16
Filter
18
Lens
14
Fluorescence
9 V
Batteries
Cell
20
12
Diode Laser and
Integral Photodiode
( Excitation Source )
10

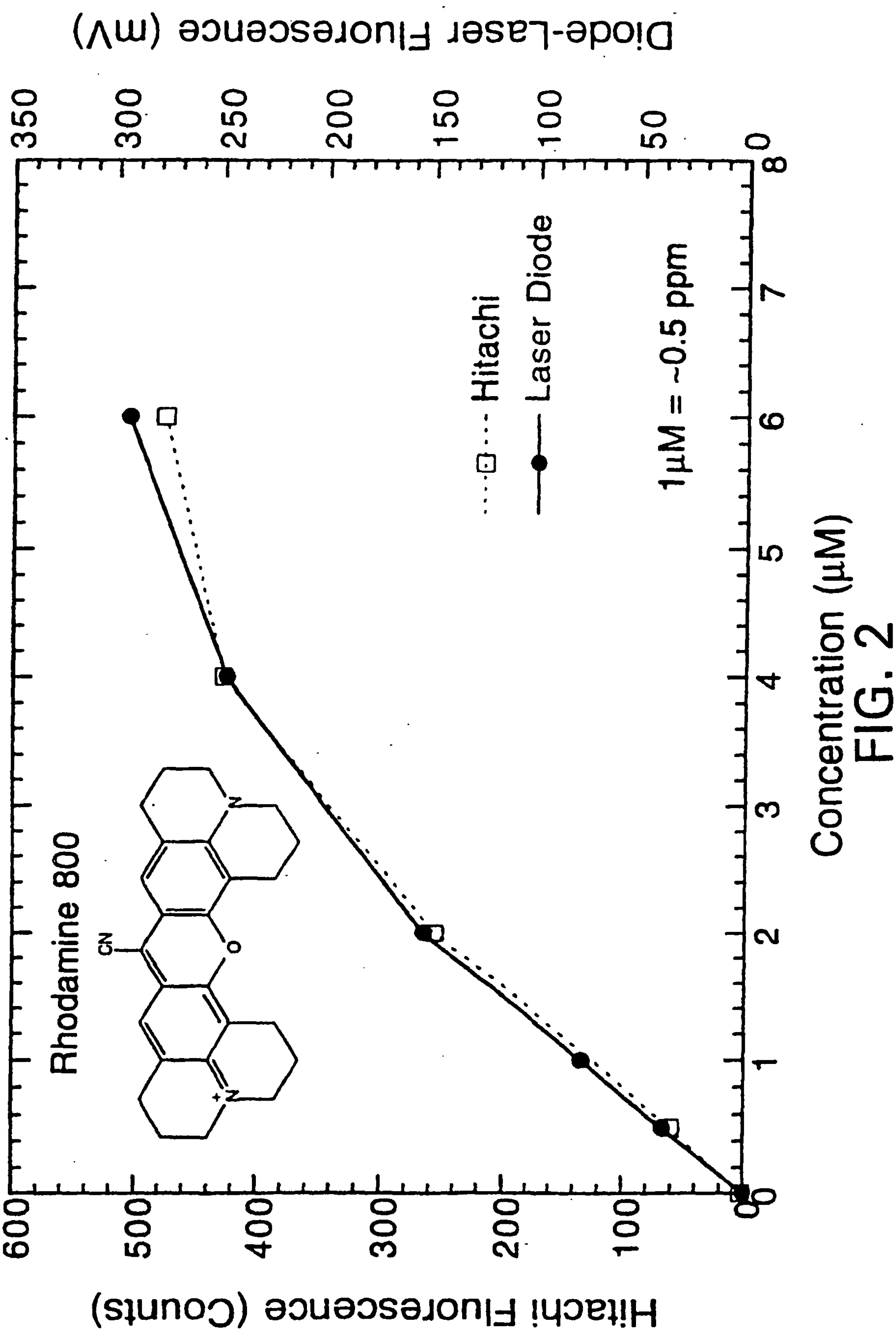
Rhodamine 800
CN
O
N
+N
Hitachi
Laser Diode
1µM = ~0.5 ppm
Hitachi Fluorescence (Counts)
0
100
200
300
400
500
600
Diode-Laser Fluorescence (mV)
0
50
100
150
200
250
300
350
Concentration (µM)
0
1
2
3
4
5
6
7
8

FIG. 2

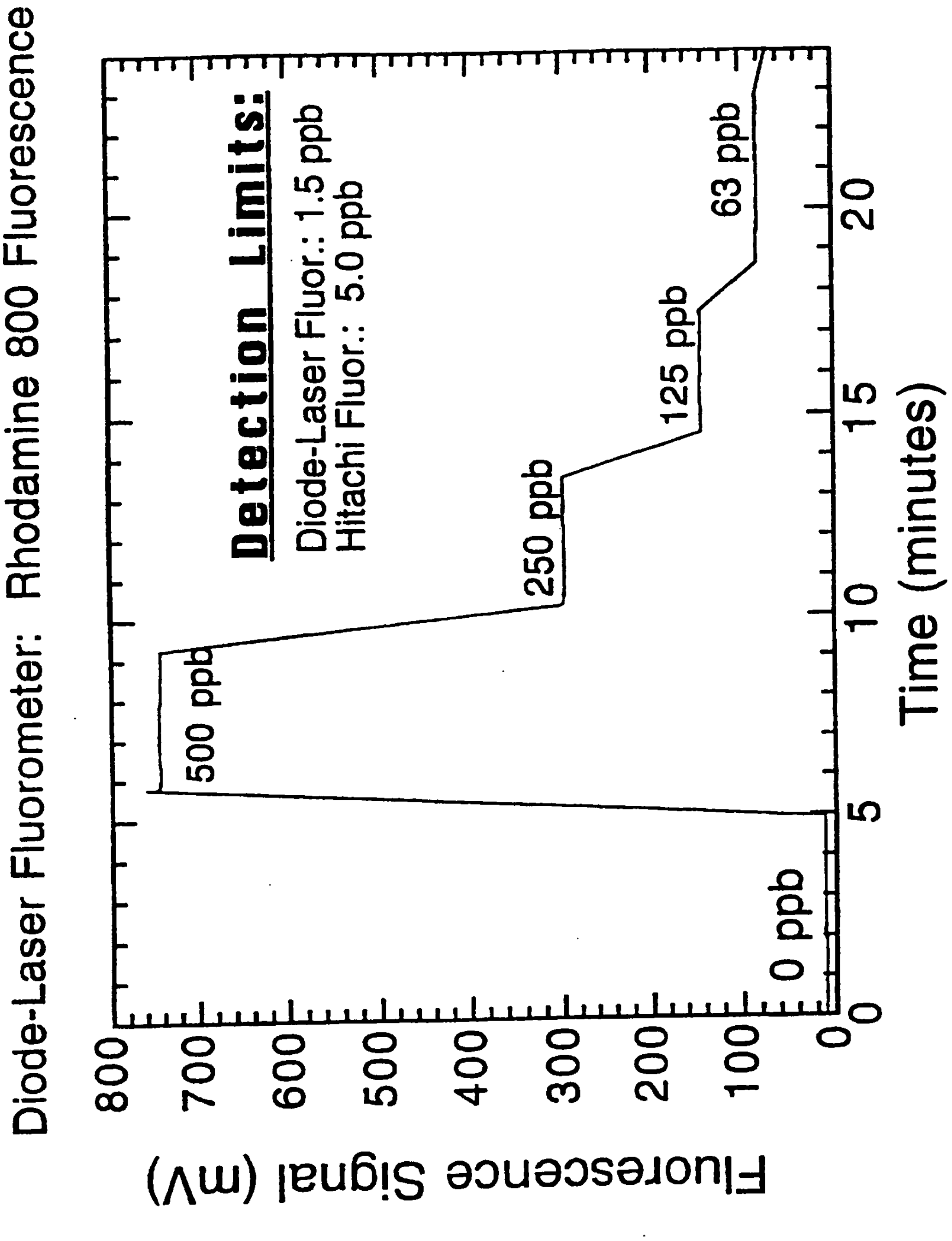
Diode-Laser Fluorometer: Rhodamine 800 Fluorescence
Fluorescence Signal (mV)
800
700
600
500
400
300
200
100
0
0
5
10
15
20
Time (minutes)
Detection Limits:
Diode-Laser Fluor.: 1.5 ppb
Hitachi Fluor.: 5.0 ppb
0 ppb
500 ppb
250 ppb
125 ppb
63 ppb

FIG. 3

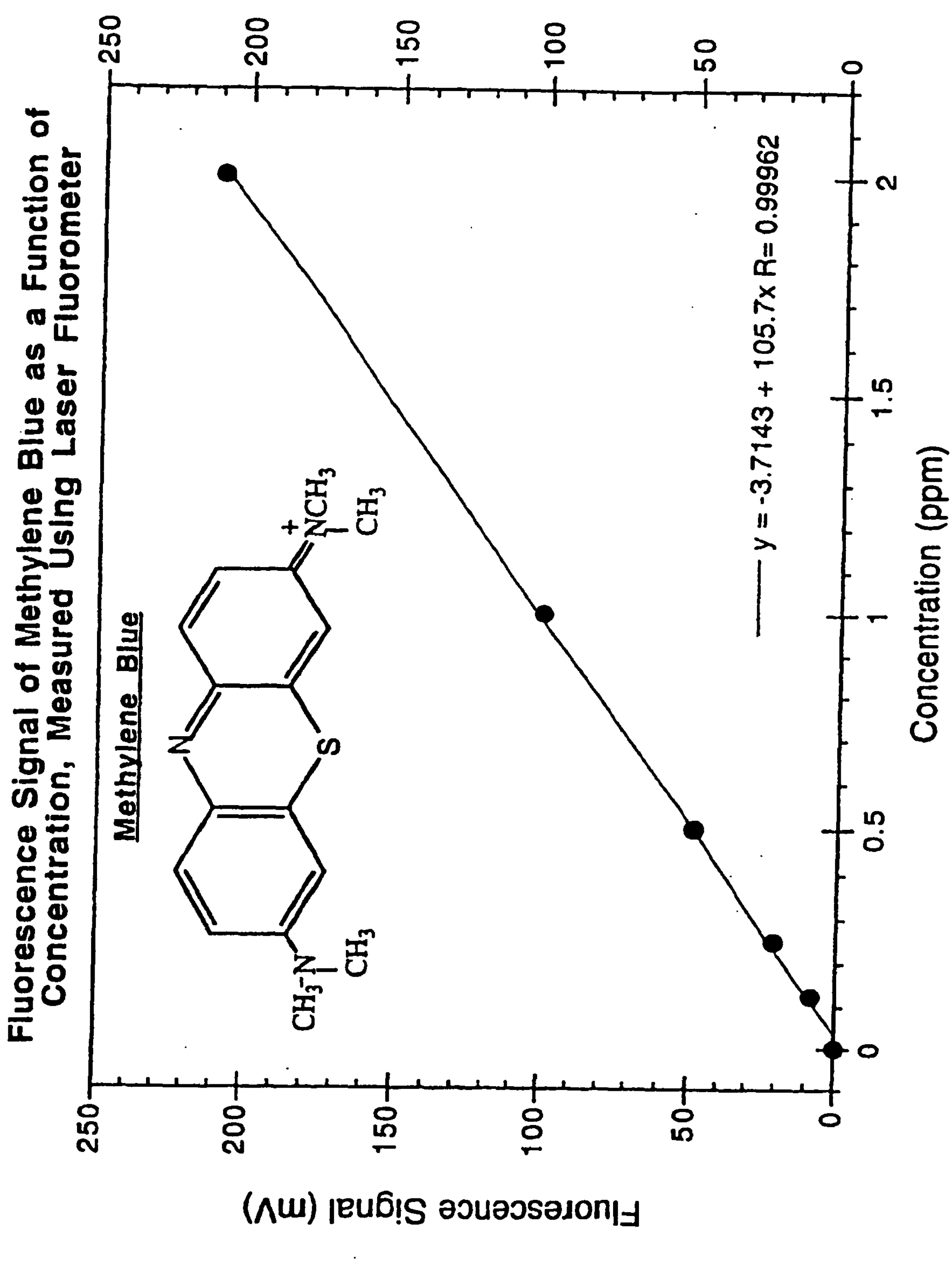
Fluorescence Signal of Methylene Blue as a Function of Concentration, Measured Using Laser Fluorometer
Methylene Blue
y = -3.7143 + 105.7x R= 0.99962
Fluorescence Signal (mV)
250
200
150
100
50
0
Concentration (ppm)
0
0.5
1
1.5
2

FIG. 4

FIG.5

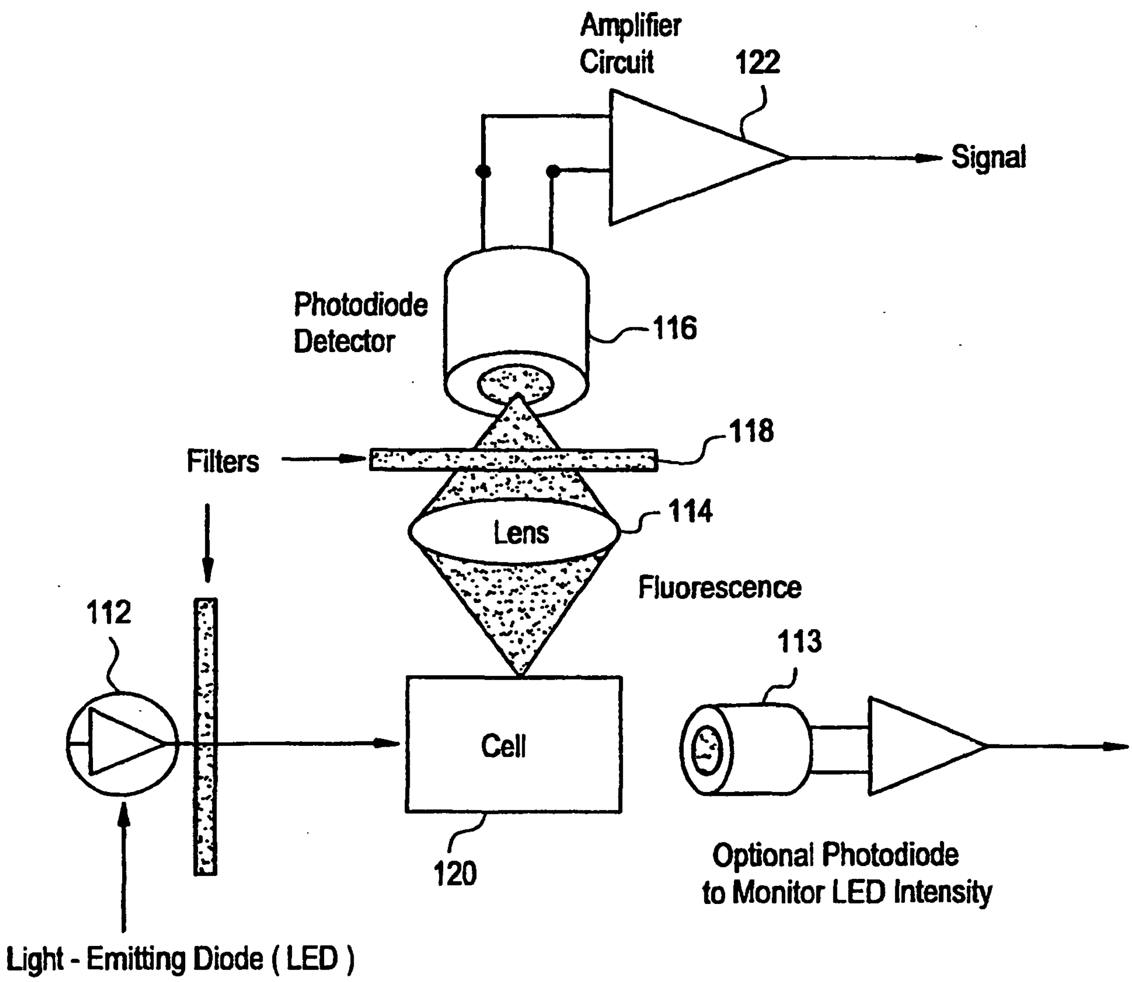
Amplifier
Circuit
122
Signal
Photodiode
Detector
116
118
Filters
114
Lens
Fluorescence
112
113
Cell
120
Optional Photodiode
to Monitor LED Intensity
Light - Emitting Diode ( LED )

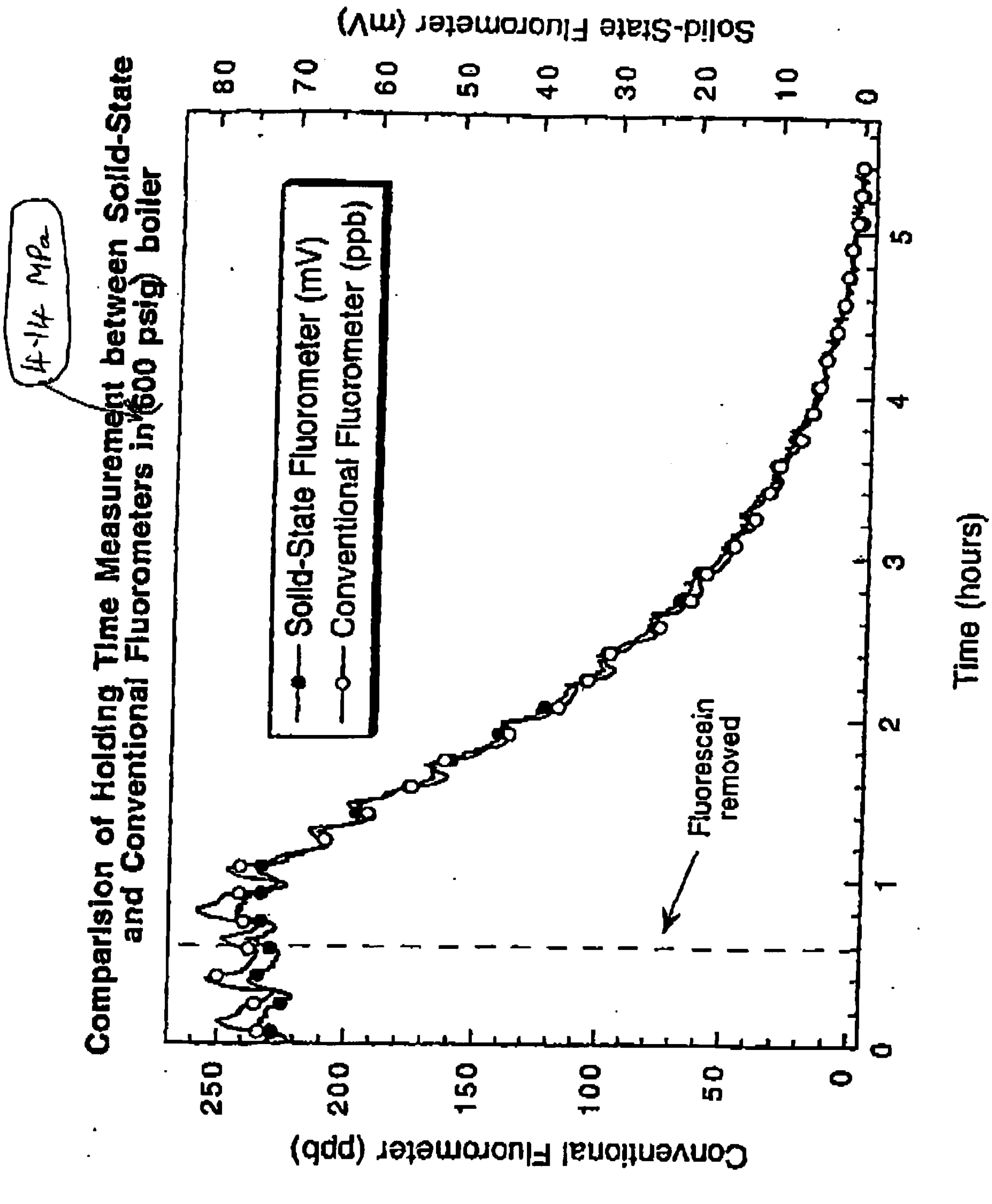
4.14 MPa
Comparision of Holding Time Measurement between Solid-State and Conventional Fluorometers in 600 psig boiler
Solid-State Fluorometer (mV)
Conventional Fluorometer (ppb)
Fluorescein removed
Conventional Fluorometer (ppb)
Solid-State Fluorometer (mV)
Time (hours)
0
50
100
150
200
250
0
10
20
30
40
50
60
70
80
0
1
2
3
4
5

FIG. 6

FIG.7

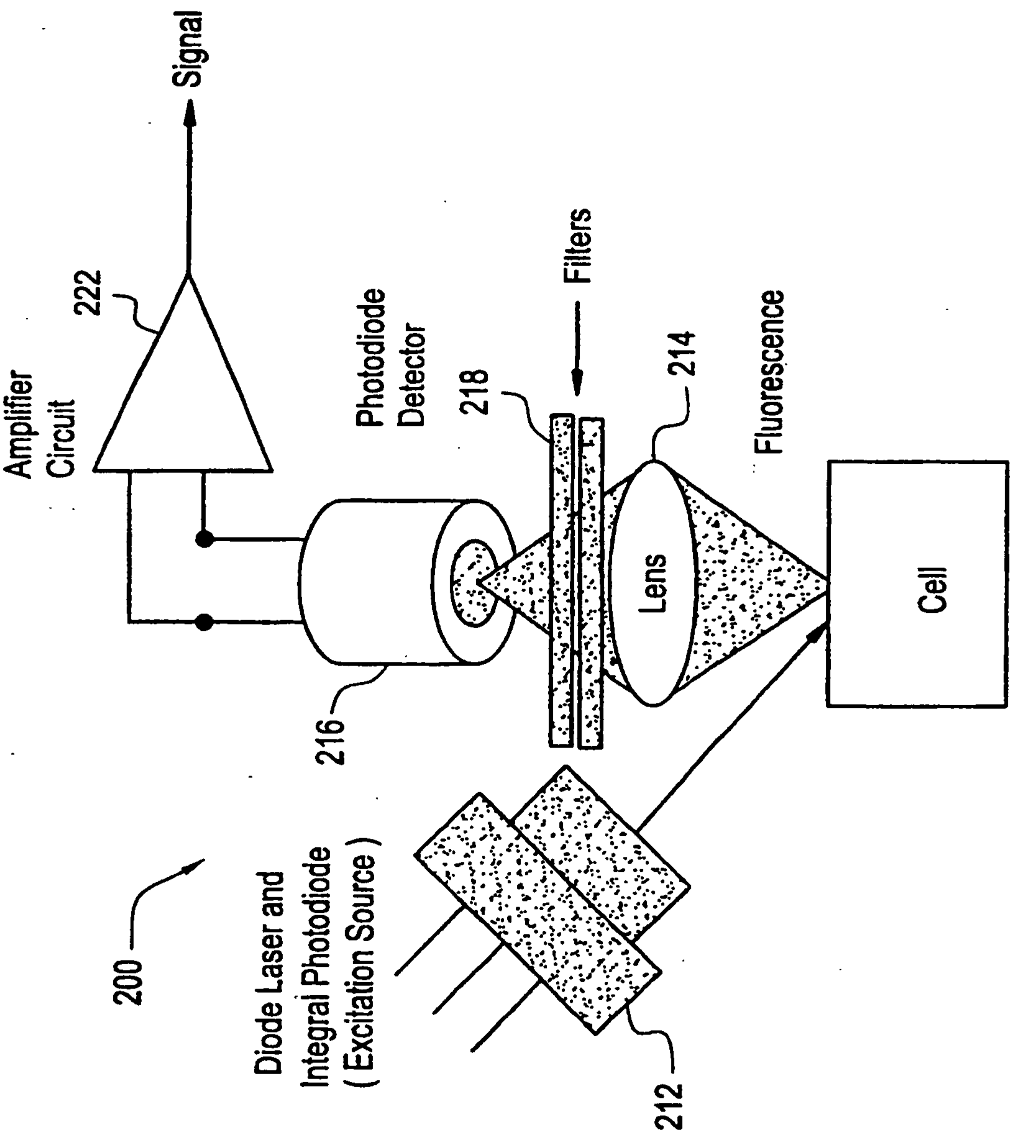
200
Diode Laser and
Integral Photodiode
( Excitation Source )
212
216
Amplifier
Circuit
222
Signal
Photodiode
Detector
218
Filters
214
Lens
Fluorescence
Cell

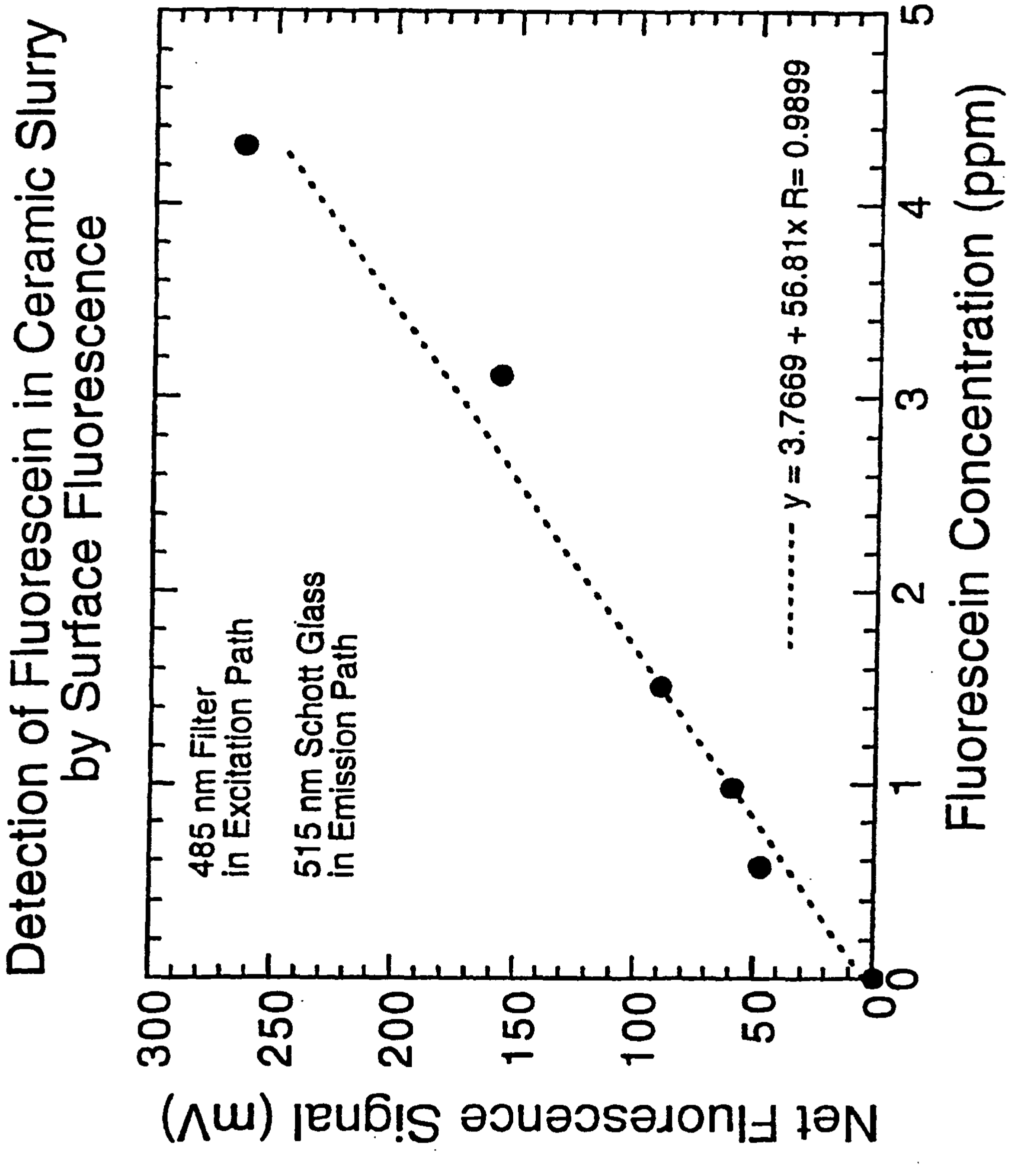
Detection of Fluorescein in Ceramic Slurry
by Surface Fluorescence
485 nm Filter
in Excitation Path
515 nm Schott Glass
in Emission Path
y = 3.7669 + 56.81x R= 0.9899
Net Fluorescence Signal (mV)
300
250
200
150
100
50
0
0
1
2
3
4
5
Fluorescein Concentration (ppm)

FIG. 8

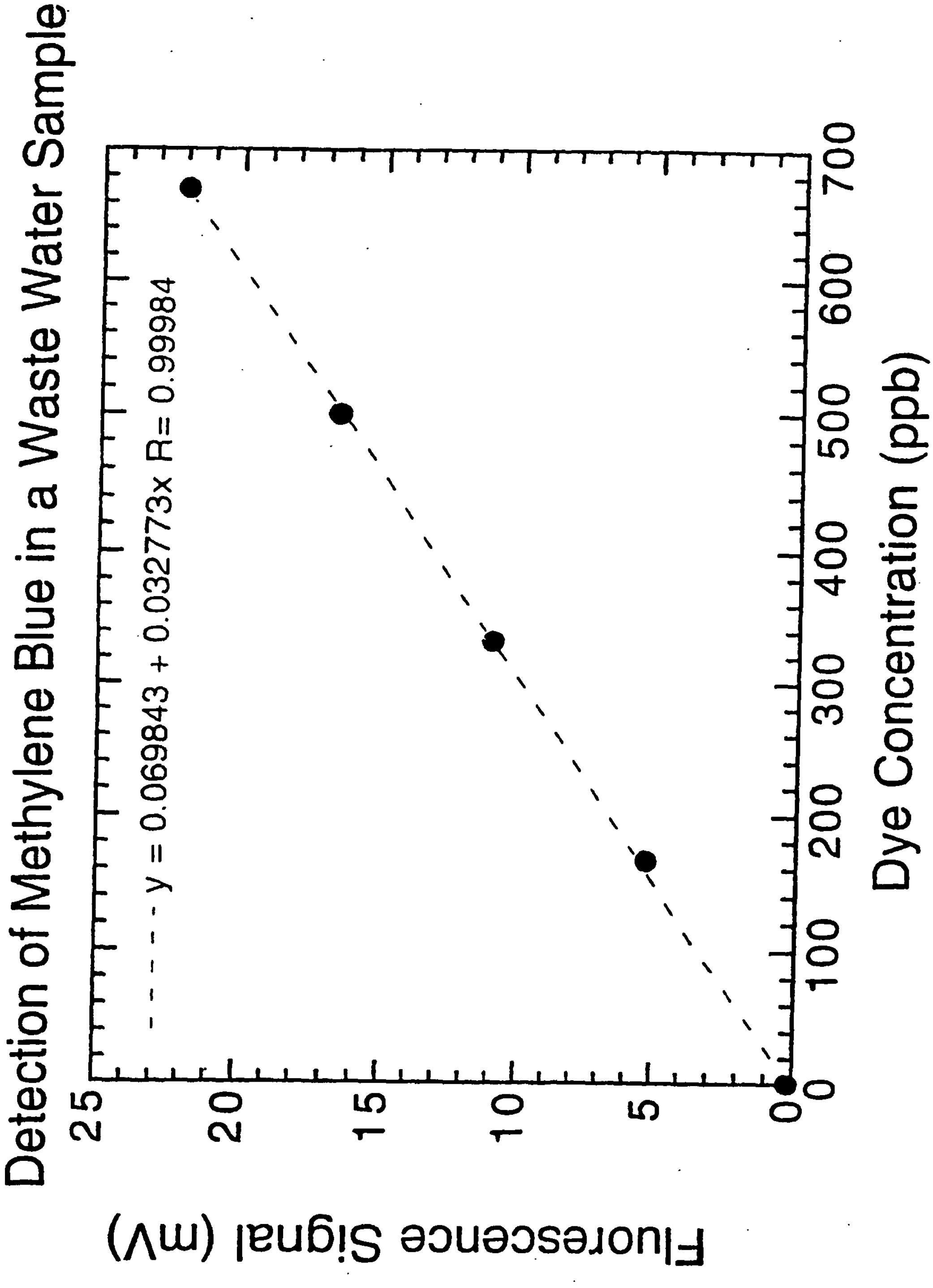
Detection of Methylene Blue in a Waste Water Sample
y = 0.069843 + 0.032773x R= 0.99984
Fluorescence Signal (mV)
0
5
10
15
20
25
0
100
200
300
400
500
600
700
Dye Concentration (ppb)

FIG. 9

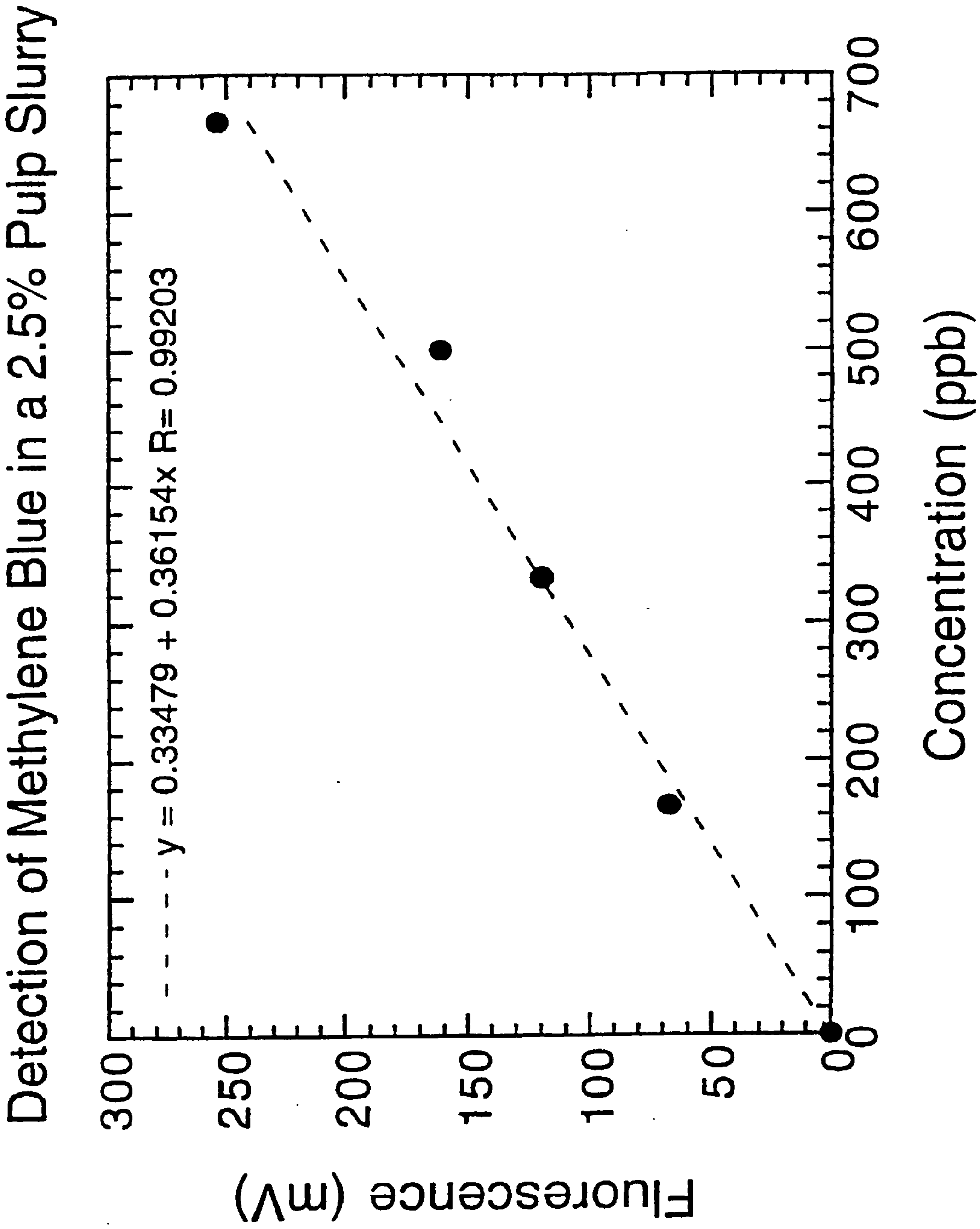
Detection of Methylene Blue in a 2.5% Pulp Slurry
y = 0.33479 + 0.36154x R= 0.99203
Fluorescence (mV)
0
50
100
150
200
250
300
Concentration (ppb)
0
100
200
300
400
500
600
700

FIG.10

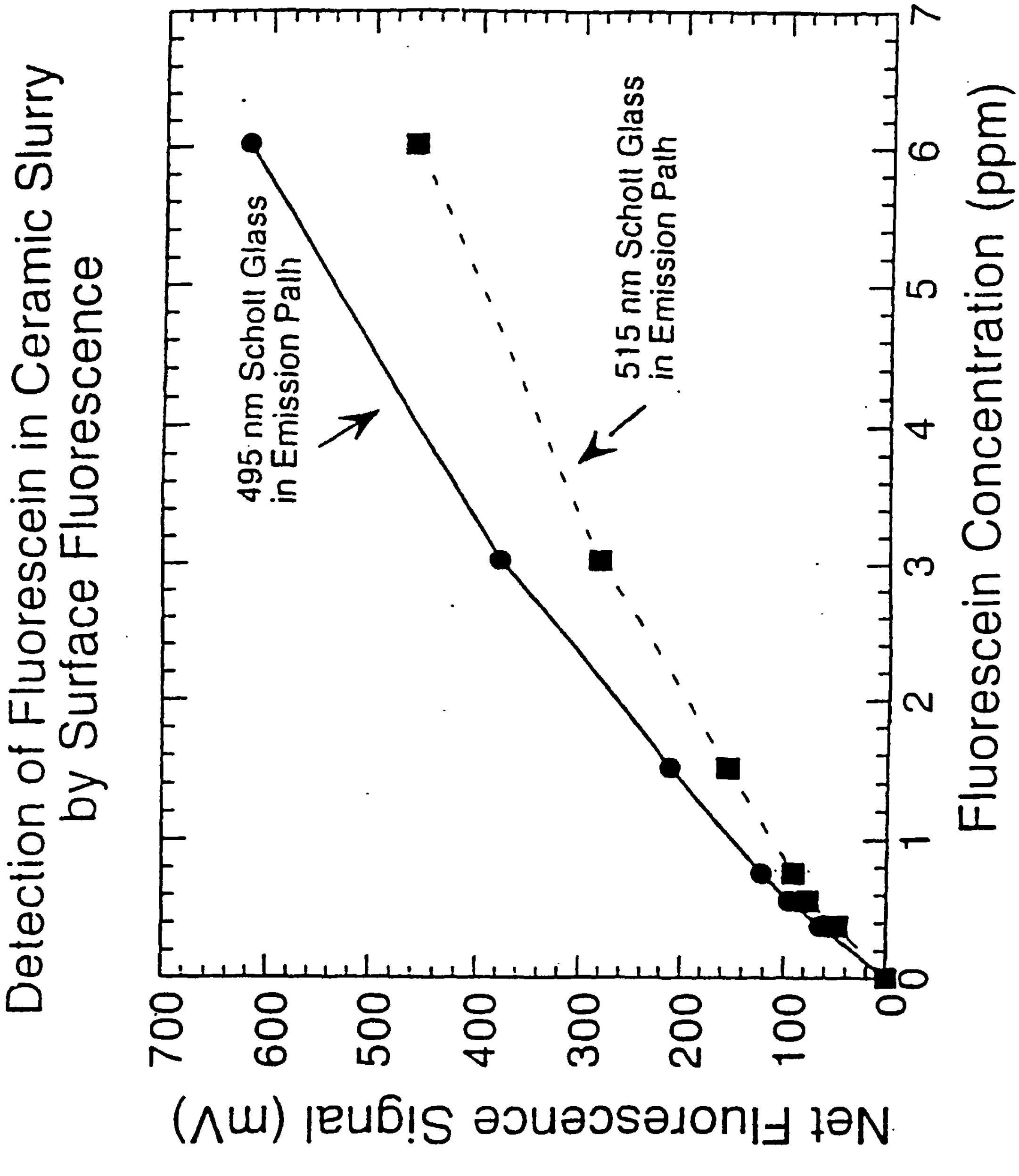
Detection of Fluorescein in Ceramic Slurry
by Surface Fluorescence
Net Fluorescence Signal (mV)
0
100
200
300
400
500
600
700
Fluorescein Concentration (ppm)
0
1
2
3
4
5
6
7
495 nm Schott Glass
in Emission Path
515 nm Schott Glass
in Emission Path

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 4300723 A1
- US 5411889 A
- US 4783314 A
- US 4992380 A
- US 5041386 A
- US 5128419 A
- US 5171450 A
- US 5216086 A
- US 5260386 A
- US 5279967 A
- US 5705394 A
- US 5278074 A


### Non-patent literature cited in the description


- **JONES et al.** High Precision Fluorimetry with a Light-Emitting Diode Source. *Appl. Spectroscopy,* 1989, vol. 42, 1469
- **IMASAKA et al.** Visible Semiconductor Laser Fluorometry. *Anal. Chem.,* 1989, vol. 61, 2285
- **PATONAY et al.** Semiconductor Lasers in Analytical Chemistry. *Proceedings of SPIE-The International Society for Optical Engineering,* 1991, vol. 1435, 42
- **HIGASHIJIMA et al.** Determination of Amino Acid By Capillary Zone Electrophoresis Based on Semiconductor Laser Fluorescence Detection. *Anal. Chem.,* 1992, vol. 64, 711
- **MANK et al.** Visible Diode Laser Induced Fluorescence Detection in Liquid Chromatography after Precolumn Derivatization of Thiols. *Anal. Chem.,* 1993, vol. 65, 2197
- **HAUSER et al.** A Solid-State Instrument for Fluorescence Chemical Sensors Using a Blue Light-emitting diode of High Intensity. *Meas. Sci. Technol.,* 1995, vol. 6, 1081
- **WENGATZ et al.** Immunoassays for Pesticide Monitoring. *Proceedings of SPIE-The International Society for Optical Engineering,* 1995, vol. 2388, 408
- **WILLIAMS et al.** Instrument to Detect Near-Infra-Red Fluorescence in Solid-Phase Immunoassay. *Anal. Chem.,* 1994, vol. 66, 3102
- **KAWAZUMI et al.** Laser Fluorimetry Using A Visible Semiconductor Laser and an Avalanche Photodiode for Capillary Electrophoresis. *Anal. Sci.,* 1995, vol. 11, 587
- **MONTAN et al.** A System for Industrial Surface Monitoring Utilizing Laser-Induced Fluorescence. *Appi. Phys.,* 1985, vol. 838, 241
- **WINKLEMAN et al.** Quantitative Fluorescence Analysis in Opaque Suspensions Using Front Face Optics. *Anal. Chem.,* 1967, vol. 39, 1007
- **HAKKANEN et al.** Laser-Induced Fluorescence Imaging of Paper Surfaces. *Appl. Spectroscopy,* 1993, vol. 47, 2122
- **SATO et al.** Properties of Full-Color Fluorescent Display Devices Excited by a UV Light-Emitting Diode. *Japanese Journal of Applied Physics,* 1998, vol. 37, L129-L131
- **T. ARAKI ; H. MISAWA.** Light-Emitting Diode-Based Nanosecond Ultraviolet Light Sources for Fluorescence Lifetime Measurements. *Rev. Sci. Instrum,* 1995, vol. 66, 5469